# EUROPÄISCHE PATENTSCHRIFT

(11) **EP 1 067 842 B1**
(45) Veröffentlichungstag und Bekanntmachung des Hinweises auf die Patenterteilung: **31.10.2001**
(21) Anmeldenummer: 99908961.8
(22) Anmeldetag: 13.03.1999
(51) Int. Cl.: A22C 15/00

(54) **AUFHÄNGESCHLAUFE FÜR WÜRSTE ODER DERGLEICHEN UND VERFAHREN ZUM HERSTELLEN DERSELBEN**
HANGING LOOP FOR SAUSAGES OR THE LIKE AND A METHOD FOR THE PRODUCTION THEREOF
BOUCLES POUR SUSPENDRE DES SAUCISSES OU SIMILAIRES ET PROCEDE POUR LES PRODUIRE

(30) Priorität: 07.04.1998 DE 19815574
(43) Veröffentlichungstag der Anmeldung: 17.01.2001
(73) Patentinhaber: Poly-clip System GmbH & Co. KG, 60489 Frankfurt am Main (DE)
(72) Erfinder: NIEDECKER, Frank, CH-6952 Cannobio (CH)
(74) Vertreter: Fischer, Ernst, Dr.
(86) Internationale Anmeldenummer: EP9901665
(87) Internationale Veröffentlichungsnummer: WO9951104

(56) Entgegenhaltungen:
- EP-A- 0 215 732
- DE-A- 1 950 897
- DE-A- 2 503 359
- DE-A- 2 724 393
- DE-A- 3 244 775
- DE-C- 19 700 891
- FR-A- 2 579 871

## Beschreibung

Die Erfindung betrifft eine Aufhängeschlaufe für Würste o. dgl., die durch Verknoten der freien Enden eines Schlaufenfadens aus schmelzbarem Material gebildet ist. Die Erfindung betrifft auch eine Anordnung solcher geknoteter Aufhängeschlaufen, die auf einem Trägerband befestigt sind, sowie ein Verfahren zum Herstellen solcher Aufhängeschlaufen.

Aufhängeschlaufen, die aus einem Schlaufenfaden bestehen, dessen zwei Enden durch einen Knoten miteinander verbunden sind, so daß der Schlaufenfaden eine geschlossene Schlaufe bildet, sind beispielsweise aus der DE 197 00 891 C bekannt. Der Knoten, mit dem dort die beiden Enden des Schlaufenfadens miteinander verbunden sind, ist unter der Bezeichnung Katzenkopf bekannt. Dieser Knoten wird deshalb gewählt, weil sich der Knoten beim Zuziehen nicht auf dem Schlaufenfaden verschiebt und damit eine Gewähr dafür bietet, daß der Knoten beim Zuziehen nicht von den Schlaufenenden abrutscht bzw. ein Schlaufenende beim Zuziehen des Knotens aus dem Knoten herausgezogen wird. Der Katzenkopf hat Ähnlichkeit mit einem Slipstek, wenn man letzteren mit zwei parallelen Seiten knotet.

Die Schlaufen haben üblicherweise eine längliche Form, so daß ihnen eine Längsausrichtung zugeordnet werden kann. Um die Schlaufen magazinieren und einer Maschine automatisch zuführen zu können, werden eine Vielzahl von Schlaufen auf einem Trägerband befestigt, wie dies auch aus der DE 197 00 891 C bekannt ist.

Das Trägerband verläuft quer zur Längsrichtung der Aufhängeschlaufen derart, daß zu beiden Seiten des Trägerbandes offene Teilschlaufen überstehen, die sich seitlich überlappen.

Mit Hilfe der Trägerbänder werden die Aufhängeschlaufen beispielsweise einer Verschließmaschine für Würste zugeführt. Beim Verschließen einer Wurst wird die zu einem Zopf eingeschnürte Wursthülle zusammen mit einer Aufhängeschlaufe in einen zunächst offenen Clip eingelegt, der dann verschlossen wird. Bereits beim Eintragen der Aufhängeschlaufen in die Verschließmaschine sowie beim Einlegen der Schlaufen in den Clip kommt es häufiger zu Problemen, weil sich die aufeinanderfolgenden Schlaufen miteinander verhaken. Solche Störungen unterbrechen den Produktionsablauf und führen zu unerwünschten Produktionsausfällen.

Zum Räuchern werden die mit einem Clip verschlossenen und mit einer Schlaufe versehenen Würste an einem Rauchspieß aufgehängt. Dazu werden die Aufhängeschlaufen auf den Rauchspieß gefädelt. Hierbei gibt es häufig Probleme, weil die Fäden einer Schlaufe oft verdrillt sind.

Ziel der Erfindung ist es, die Nachteile des Standes der Technik weitgehend zu vermeiden.

Dieses Ziel wird erfindungsgemäß mit Hilfe von Aufhängeschlaufen der eingangs genannten Art erreicht, bei denen die Enden der Schlaufenfäden durch Anschmelzen verdickt und durch einen Fischermannsknoten miteinander verbunden sind. Der Fischermannsknoten ist derjenige Knoten, der auch zum Herstellen eines Festen Auges in einem Seil verwendet wird.

Im Gegensatz zum Katzenkopf steht der Schlaufenfaden beim Fischermannsknoten nicht zu beiden Seiten des Knotens über, so daß es praktisch nicht mehr zum Verhaken des Knotens in einer anderen Aufhängeschlaufe kommt. Der Fischermannsknoten konnte bisher jedoch deshalb nicht zum Verbinden der freien Enden des Schlaufenfadens verwendet werden, weil er beim Zuziehen durch Belasten auf dem Schlaufenfaden wandert und daher von den Fadenenden abrutschen oder ein Ende des Schlaufenfadens aus dem Knoten herausgezogen werden kann. In der DE 19 50 897 A ist das Verschließen eines gerafften Kunstdarmes unter Bildung einer Aufhängeschlaufe vorgeschlagen worden, bei dem drei Fischermannsknoten hintereinander gebildet werden und am Kunstdarmzopf verbleiben, wobei letzterer in den mittleren Knoten eingelegt wird. Das hat mit der Herstellung diskreter Aufhängeschlaufen, die in das Verschließorgan (z.B. Clip) nur eingelegt werden, nichts zu tun.

Es hat sich gezeigt, daß ein Abrutschen des Knotens von den Enden der Schlaufenfäden oder das Herausziehen eines Schlaufenfaden-Endes aus dem Knoten durch ein die freien Fadenenden verdickendes Anschmelzen derselben vermieden werden kann. Dieses Anschmelzen des Schlaufenfadens führt dazu, daß die Filamente des Schlaufenfadens miteinander verbunden und in ihrer relativen Lage zueinander fixiert sind. Der Durchmessen des Schlaufenfadens kann dadurch im Bereich des Fadenendes nicht mehr so stark komprimiert werden wie im restlichen Teil des Schlaufenfadens. Die mangelnde Komprimierbarkeit des Schlaufenfadens an der Anschmelzstelle bzw. die Verdickung führt dazu, daß der Fischermannsknoten nicht mehr über die freien Enden des Schlaufenfadens hinauswandern und auf diese Weise vom Schlaufenfaden abrutschen kann.

Der Nachteil des Fischermannsknotens, nämlich seine Eigenschaft, auf dem Schlaufenfaden zu wandern, verkehrt sich in diesem Zusammenhang sogar in einen Vorteil, da der Knoten beim Zuziehen leicht bis dicht an die freien Fadenenden heran - aber nicht darüber hinaus - geschoben werden kann. Dadurch ragen die freien Fadenenden nur minimal über die Knoten hinaus und das im Gegensatz zum Katzenkopf auch nur auf einer Seite des Knotens, so daß die Gefahr, daß sich der Knoten in einer anderen Aufhängeschlaufe verhakt, ausgeschlossen ist.

Es hat sich im übrigen gezeigt, daß es vorteilhaft ist, wenn die beiden Enden der Schlaufenfäden gemeinsam angeschmolzen und verdickt werden, so daß sie dabei miteinander verschmelzen, wie dies an sich von andersartigen Aufhängeschlaufen aus der DE 32 44 775 bekannt ist. Dies kann beispielsweise auf einfachste Art dadurch geschehen, daß der Schlaufenfaden von einem Vorrat abgezogen, zur Schlaufe gelegt, verknotet und anschließend mit einem heißen Trennmesser so von dem Vorrat abgeschnitten wird, daß dabei gleichzeitig die beiden entstehenden Enden des Schlaufenfadens miteinander verschmelzen. Außerdem werden die über den Knoten überstehenden Enden des Schlaufenfadens auf diese Weise so weit wie möglich verkürzt. Dieser besonders gewünschte Effekt wird im übrigen auch dann erzielt, wenn die Enden des Schlaufenfadens durch das heiße Abschneiden nicht miteinander verschmolzen werden, sondern jedes Fadenende für sich angeschmolzen wird.

Ein geeignetes Verfahren zum Herstellen der Aufhängeschlaufe zeichnet sich dementsprechend dadurch aus, daß der Schlaufenfaden zunächst zur Schlaufe gelegt und verknotet wird und anschließend der außerhalb der Schlaufe über den Knoten überstehende Schlaufenfaden derart heiß abgeschnitten wird, daßdie dabei entstehenden Enden des Schlaufenfadens angeschmolzen und dabei verdickt werden.

Dem Erreichen des der Erfindung zugrunde liegenden Ziels dient auch eine Anordnung geknoteter Aufhängeschlaufen auf einem Trägerband, bei der beidseitig des Trägerbandes Teilschlaufen überstehen und bei der sich die Knoten der Aufhängeschlaufen nahe der Befestigung der Aufhängeschlaufen auf dem Trägerband befinden, wie dies aus der DE-PS 197 00 891 C bekannt war.

Diese Anordnung beruht auf der Erkenntnis, daß die Schlaufenfäden beim Verknoten ihrer beiden Enden etwas verdrehen, so daß die geschlossene Schlaufe zum Verdrillen neigt. Diese Neigung wird einerseits durch die Verwendung des Fischermannsknotens anstelle des Katzenkopfes vermindert. Zusätzlich wird ein etwa vorhandener Drall des Schlaufenfadens durch die Befestigung am Trägerband von diesem aufgenommen und auf diese Weise ein Verdrillen der Aufhängeschlaufen wirksam verhindert, da sich der Knoten in der Nähe des Trägerbandes befindet.

Bevorzugt wird - wie im Stand der Technik - eine Anordnung, bei der die Teilschlaufen unterschiedlich groß sind und bei der sich die Knoten der Aufhängeschlaufen auf der Trägerbandseite der kleineren Teilschlaufen befinden.

Es hat sich herausgestellt, daß es bei den erfindungsgemäßen Aufhängeschlaufen nicht mehr dadurch zu Störungen kommt, daß sich der Knoten einer Aufhängeschlaufe in einer anderen Aufhängeschlaufe verhakt. Auch wird ein Verhaken der Knoten mit der Verschließmaschine vermieden. Es kommt auch nicht mehr dazu, daß eine Wursthülle platzt, weil der Knoten beim Durchführen der Schlaufe durch die Darmbremse einer Maschine zum Befüllen von Würsten stört. All diese Effekte werden auch von der beschriebenen Anordnung von Aufhängeschlaufen auf dem Trägerband allein erzielt und in ihrer Wirkung durch die Kombination der erfindungsgemäßen Aufhängeschlaufen mit der beschriebenen Anordnung von Aufhängeschlaufen noch gesteigert.

Die Erfindung soll nun an Hand von Ausführungsbeispielen mit Hilfe der Zeichnungen näher erläutert werden, Die Figuren der Zeichnung zeigen:
- Fig. 1: eine Aufhängeschlaufe, deren freie Enden durch einen Fischermannsknoten miteinander verbunden sind;
- Fig. 2: eine Aufhängeschlaufe nach dem Stand der Technik;
- Fig. 3: eine Anordnung auf einem Trägerband befestigter Aufhängeschlaufen; und
- Fig. 4: eine an einem Wurstende befestigte Aufhängeschlaufe.

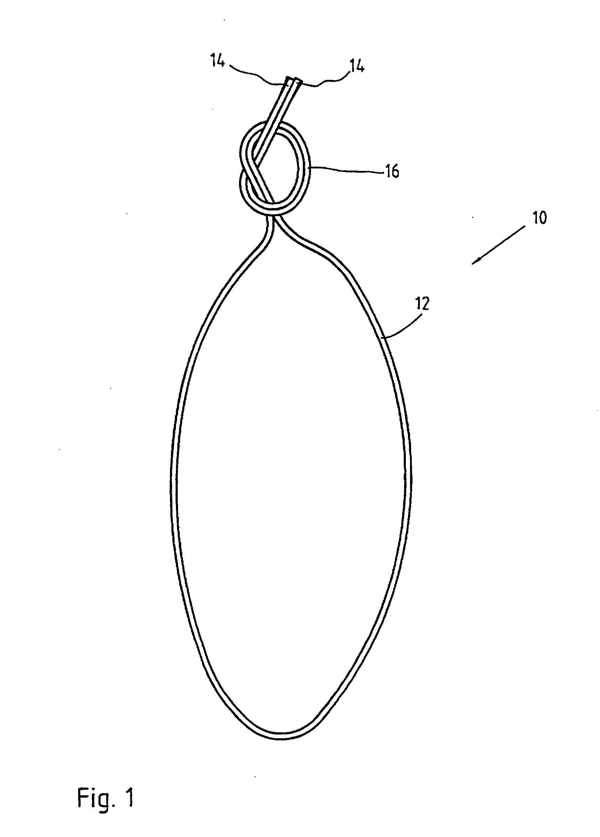

Die Aufhängeschlaufe 10 aus Fig. 1 besteht aus einem Schlaufenfaden 12, dessen freie Enden 14 durch einen Fischermannsknoten 16 miteinander verbunden sind, so daß die Aufhängeschlaufe 10 geschlossen ist. Die freien Enden 14 sind jeweils angeschmolzen, so daß die freien Enden 14 im Vergleich zum übrigen Schlaufenfaden 12 eine Dickstelle darstellen.

Diese Dickstellen verhindern, daß der Fischermannsknoten 16 beim Zuziehen durch Belasten über die freien Enden 14 des Schlaufenfadens 12 hinausrutscht.

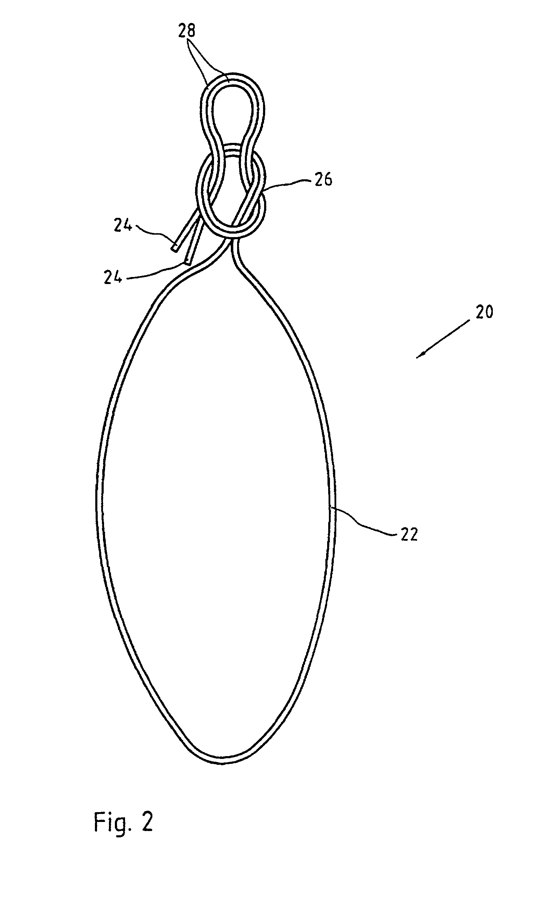

Zum Vergleich sind in Fig. 2 herkömmliche, dem Stand der Technik entsprechende Aufhängeschlaufen 20 abgebildet. Diese Aufhängeschlaufen 20 werden von einem Schlaufenfaden 22 gebildet, dessen freie Enden 24 durch einen als Katzenkopf bezeichneten Knoten 26 miteinander verbunden sind, so daß die Aufhängeschlaufe 20 geschlossen ist. Der Knoten 26 wurde deshalb gewählt, weil er beim Zuziehen durch Belasten auf dem Schlaufenfaden 22 nicht verrutscht. Erkennbar ist jedoch, daß der Schlaufenfaden 22 zu beiden Seiten des Knotens 26 übersteht, nämlich einmal in Form der freien Enden 24 und auf der anderen Seite in Form von Knotenschlaufen 28. Durch diese Überstände neigt der Knoten 26 zum Verhaken.

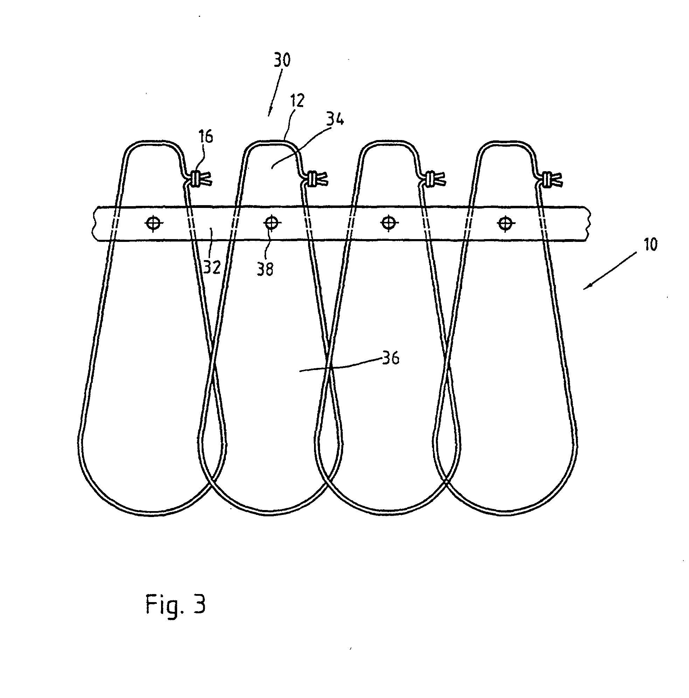

Bei der in Fig. 3 abgebildeten Anordnung 30 von Aufhängeschlaufen 10 sind die Aufhängeschlaufen 10 nebeneinander auf einem Trägerband 32 befestigt. Die befestigten Aufhängeschlaufen 10 haben eine längliche Form, so daß ihnen eine Längsorientierung zugeordnet werden kann. Die Aufhängeschlaufen 10 sind so auf dem Trägerband 32 befestigt, daß das Trägerband 32 quer zur Längsorientierung der Aufhängeschlaufen 10 verläuft und daß - bezogen auf die Zeichnung - oberhalb des Trägerbandes 32 kleinere Teilschlaufen 34 überstehen, während unterhalb des Trägerbandes größere Teilschlaufen 36 überstehen. Der Knoten 16 einer jeden Aufhängeschlaufe 10 befindet sich im Bereich der kleineren Teilschlaufe 34 in der Nähe des Trägerbandes 32. Weil sich jeder Knoten 16 somit in unmittelbarer Nähe einer Befestigung der Aufhängeschlaufen 10 auf dem Trägerband 32 befindet, wird ein eventuell von dem Knoten 16 in dem Schlaufenfaden 12 erzeugter Drall von der Befestigung aufgenommen und kann nicht zu einem Verdrillen insbesondere der größeren Teilschlaufen 36 führen.

Das Trägerband 32 kann entweder aus Papier oder aus Kunststoff bestehen. Es weist im gleichen Abstand voneinander, in dem auch die Aufhängeschlaufen 10 auf dem Trägerband befestigt sind, Löcher 38 auf, die dem maschinellen Transport des Trägerbandes 32 dienen. Die Löcher 38 befinden sich jeweils innerhalb einer Aufhängeschlaufe 10. Zum Befestigen der Aufhängeschlaufen 10 auf dem Trägerband 32 sind die Aufhängeschlaufen 10 auf das Trägerband 32 aufgeklebt oder aufgesiegelt.

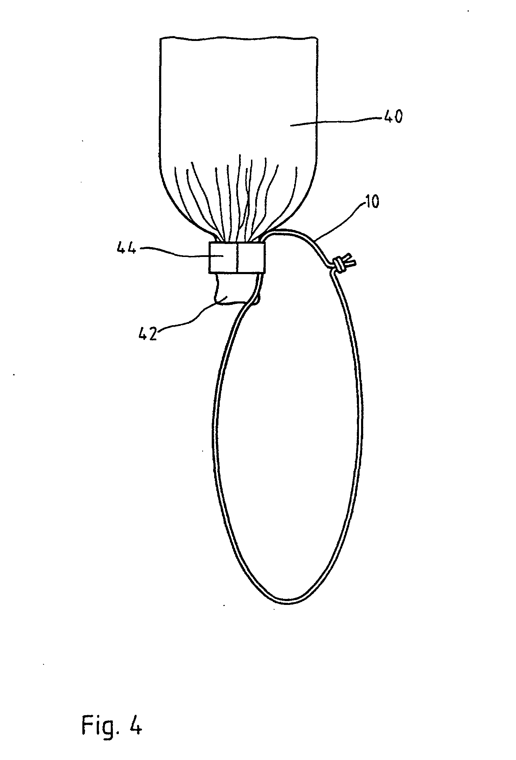

Zum Zuführen des Trägerbandes 32 zur Verschließstelle einer Verschließmaschine für Würste o. dgl. wird bei jedem Verschlußvorgang jeweils eine Aufhängeschlaufe 10 von dem Trägerband 32 abgezogen und zusammen mit der zu verschließenden Wursthülle in einen offenen Verschlußclip eingelegt, welcher anschließend von der Verschließmaschine geschlossen wird. Auf diese Weise ergibt sich die in Fig. 4 abgebildete Anordnung. Eine befüllte Wursthülle 40 ist an einem Ende 42 zu einem Zopf zusammengerafft und mit einem Verschlußclip 44 verschlossen. in den Verschlußclip 44 ist auch eine Aufhängeschlaufe 10 eingelegt und auf diese Weise mit der befüllten Wursthülle 40 verbunden, so daß die entsprechende Wurst mittels der Schlaufe 10 beispielsweise auf einen Rauchspieß aufgefädelt werden kann. Das Trägerband 32 wurde von der Schlaufe 10 entfernt.

Durch den Einsatz von vorzugsweise steifem Fadenmaterial bildet die von dem Trägerband 32 gelöste Schlaufe 10 eine ovale Form, so daß das Auffädeln auf den Rauchspieß leicht vonstatten geht.

## Patentansprüche

1. Aufhängeschlaufe (10) für Würste o. dgl., gebildet von einem schmelzbaren Schlaufenfaden (12), dessen freie Enden (14) miteinander verknotet sind,
**dadurch gekennzeichnet, daß** die Enden (14) des Schlaufenfadens (12) durch Anschmelzen verdickt und durch einen Fischermannsknoten (16) miteinander verbunden sind.

2. Aufhängeschlaufe nach Anspruch 1,
**dadurch gekennzeichnet, daß** die Enden (14) des Schlaufenfadens (12) zusätzlich miteinander verschmolzen sind.

3. Anordnung auf einem Trägerband (32) befestigter, geknoteter Aufhängeschlaufen (10) nach Anspruch 1, bei der beidseitig des Trägerbandes (32) Teilschlaufen (34, 36) überstehen und bei der sich die Knoten (16) der Aufhängeschlaufen (10) nahe der Befestigung der Aufhängeschlaufen (10) auf dem Trägerband (32) befinden.

4. Anordnung nach Anspruch 3,
**dadurch gekennzeichnet, daß** die Teilschlaufen (34, 36) unterschiedlich groß sind und sich die Knoten (16) auf der Trägerbandseite der kleineren Teilschlaufen (34) befinden.

5. Verfahren zum Herstellen einer Aufhängeschlaufe nach Anspruch 1 oder 2,
**dadurch gekennzeichnet, daß** der Schlaufenfaden zunächst zur Schlaufe gelegt und verknotet wird und daß anschließend der außerhalb der Schlaufe über den Knoten überstehende Schlaufenfaden derart heiß abgeschnitten wird, daß die Enden des Schlaufenfadens angeschmolzen und dabei verdickt sowie ggf. zusätzlich miteinander verschmolzen werden.

## Claims

1. A suspension loop (10) for sausages or the like, formed by a meltable loop thread (12) whose free ends (14) are tied into a knot, **characterized in that** the ends (14) of the loop thread (12) are thickened by fusing them and are connected with each other by a fisherman's knot (16).

2. The suspension loop as claimed in claim 1,
**characterized in that** the ends (14) of the loop thread (12) are additionally fused together.

3. An arrangement of knotted suspension loops (10) fastened on a carrier strip (32) as claimed in claim 1, wherein partial loops (34, 36) project from both sides of the carrier strip (32), and wherein the knots (16) of the suspension loops (10) are located close to the point where the suspension loops (10) are fastened on the carrier strip (32).

4. The arrangement as claimed in claim 3,
**characterized in that** the partial loops (34, 36) have different sizes and the knots (16) are located on the carrier strip side of the smaller partial loops (34).

5. A method of producing a suspension loop as claimed in claim 1 or 2, **characterized in that** the loop thread is first of all arranged into a loop and tied into a knot, and that subsequently the loop thread projecting from the knot outside the loop is cut off using such a high temperature that the ends of the loop thread are attached by melting and thereby thickened as well as possibly fused together in addition.

## Revendications

1. Boucle (10) de suspension de saucisses ou similaires formée d'un fil (12) de boucle fusible dont les extrémités (14) libres sont nouées entre elles, **caractérisée en ce que** les extrémités (14) du fil (12) de boucle sont épaissies par fusion l'une sur l'autre et sont reliées entre elles par un noeud (16) de pêcheur.

2. Boucle de suspension selon la revendication 1, **caractérisée en ce que** les extrémités (14) du fil (12) de boucle sont fondues en outre entre elles.

3. Agencement de boucles (10) de suspension nouées et fixées sur une bande support (32) suivant la revendication 1, dans lequel des boucles (34, 36) partielles font saillie de part et d'autre de la bande support (32) et dans lequel les noeuds (16) des boucles (10) de suspension se trouvent à proximité de la fixation des boucles (10) de suspension sur la bande support (32).

4. Agencement selon la revendication 3, **caractérisé en ce que** les boucles (34, 36) partielles sont de dimensions différentes et les noeuds (16) se trouvent du côté de la bande support où se trouvent les boucles (34) partielles les plus petites.

5. Procédé de production d'une boucle de suspension suivant la revendication 1 ou 2, **caractérisé en ce que** le fil de boucle est d'abord mis en une boucle et noué, et **en ce qu'**ensuite le fil de boucle en saillie du noeud à l'extérieur de la boucle est coupé à chaud de façon que les extrémités du fil de boucle soient appliquées l'une sur l'autre par fusion et ainsi épaissies ainsi que, le cas échéant en outre, fondues l'une à l'autre.
